(19) Europäisches Patentamt
European Patent Office
Office européen des brevets

(11) Veröffentlichungsnummer: **0 057 381**
**B1**

(12) # EUROPÄISCHE PATENTSCHRIFT

(45) Veröffentlichungstag der Patentschrift: **01.08.84**

(51) Int. Cl.³: **C 09 B 1/467,** D 06 P 1/24

(21) Anmeldenummer: **82100401.7**

(22) Anmeldetag: **21.01.82**

(54) **Trisanthrachinonylaminotriazinverbindungen sowie deren Herstellung und Verwendung als Küpenfarbstoffe.**

(30) Priorität: **31.01.81 DE 3103312**

(43) Veröffentlichungstag der Anmeldung: **11.08.82 Patentblatt 82/32**

(45) Bekanntmachung des Hinweises auf die Patenterteilung: **01.08.84 Patentblatt 84/31**

(84) Benannte Vertragsstaaten: **CH DE FR GB IT LI**

(56) Entgegenhaltungen:
**CH - A - 289 289**
**CH - A - 348 547**
**DE - A - 590 163**
**US - A - 2 479 943**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Hohmann, Walter, Dr., Fontanestrasse 17, D-5090 Leverkusen (DE)**
Erfinder: **Wunderlich, Klaus, Dr., Carl-Rumpff-Strasse 21, D-5090 Leverkusen (DE)**

**EP 0 057 381 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind neue Triazinverbindungen der Formel

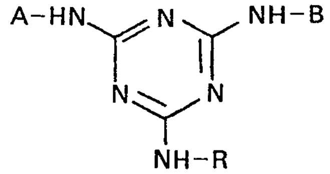

(I)

worin:

R für A oder B,

A für einen Rest der Formel

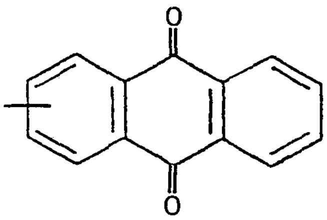

und

B für einen Rest der Formel

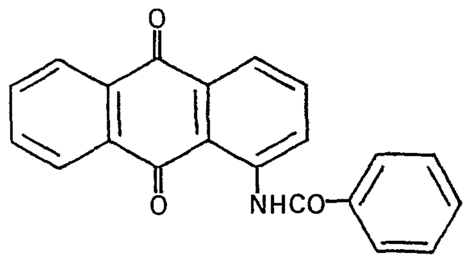

stehen, wobei diese Reste durch in der Chemie der Küpenfarbstoffe übliche Substituenten substituiert sein können.

Derartige Substituenten befinden sich gegebenenfalls vor allem im nicht mit dem Triazinrest verknüpften Seitenring von A und in dem Benzoylrest des Restes B; beispielhaft seien genannt:

Cl, Br, $C_1$ bis $C_4$-Alkyl, $C_1$ bis $C_4$-Alkoxy, $CF_3$ und $NO_2$

Vorzugsweise sind die Reste A und B aber nicht weiter substituiert.

Man erhält die neuen Farbstoffe beispielsweise dadurch, dass man 1 mol Cyanurchlorid mit 1 oder 2 mol eines Amins der Formel $A-NH_2$ oder $B-NH_2$ in einem unter den Reaktionsbedingungen indifferenten Lösungsmittel zum entsprechenden Mono- oder Diaminotriazin umsetzt und dieses anschliessend mit 2 bzw. 1 mol eines Amins der Formel $B-NH_2$ bzw. $A-NH_2$ in Gegenwart einer aromatischen Oxyverbindung zum entsprechenden Triaminotriazin kondensiert. Eine Variante für die Einführung des Restes B besteht darin, zunächst mit 1,5-Diaminoanthrachinon so umzusetzen, dass nur eine Aminogruppe mit dem Cyanurchlorid in Reaktion tritt und die nicht umgesetzte Aminogruppe zu acylieren, vorzugsweise mit Säurechloriden nach üblichen Verfahren. Die Acylierung kann dabei nach vorherigem vollständigen oder partiellen Umsatz aller Chloratome des Cyanurchlorids erfolgen. Geeignete indifferente Lösungsmittel zur Durchführung der ersten Stufe sind Nitrobenzol, Chlorbenzol, Dichlorbenzol, Naphthalin und ähnliche Verbindungen.

Die Reaktionstemperaturen für den Austausch eines Chloratoms des Cyanurchlorids liegen zwischen 100 und 150, vorzugsweise 130 und 140°C. Zur Herstellung von Diaminotriazinen werden höhere Temperaturen benötigt: 160 bis 210, vorzugsweise 180 bis 200°C.

Geeignete Oxyverbindungen zum vollständigen Chloraustausch sind Phenol, Chlorphenole, Kresole, Naphthole usw. Bevorzugt ist das normale Phenol.

Die Umsetzung in diesen Phenolen erfolgt bei 110 bis 150, vorzugsweise bei 120 bis 145°C. Die eingesetzten Phenolmengen betragen vorzugsweise das 15- bis 40fache der Cyanurchloridmenge.

Bei der stufenweisen Umsetzung von Cyanurchlorid mit den Anthrachinonaminen setzt man zweckmässigerweise zuerst das Amin mit dem geringeren Molgewicht ein.

Besonders vorteilhaft ist es aber, die neuen Farbstoffe im Eintopfverfahren herzustellen.

Dabei arbeitet man von vornherein in einem Phenol als Reaktionsmedium, wobei das Gemisch der Reaktionspartner zunächst auf Temperaturen von 70 bis 110, vorzugsweise 80-100°C, zur Erzielung eines Mono- bzw. Dichloraustausches erwärmt und erst danach die Temperatur auf 120 bis 150°C erhöht wird, bis der vollständige Halogenaustausch eingetreten ist. Der Fortgang der Reaktion wird dabei in üblicher Weise analytisch verfolgt.

Sobald auf diese Weise im kleinen Massstab das Temperatur/Zeit-Raster ermittelt worden ist, können die ermittelten Bedingungen unmittelbar auf die technischen Grossproduktionen übertragen werden. Zur Schönung der Reaktionsprodukte können diese schliesslich einer üblichen oxydativen Nachbehandlung unterworfen werden.

Unter den erfindungsgemässen Reaktionsbedingungen werden überraschenderweise Produkte mit sehr geringen Restchlor-Werten (d.h. weniger als 0,8, vorzugsweise weniger als 0,4%) erhalten.

Führt man dagegen die letzte Stufe des Halogenaustauschs unterhalb 120°C durch, so steigt der Restchlor-Gehalt deutlich an, wobei Produkte minderer Qualität, insbesondere unbefriedigender Nassechtheiten, erhalten werden.

Andererseits ist auch eine Erwärmung in Gegenwart von Phenolen auf Temperaturen oberhalb 150°C zu vermeiden, weil in diesem Temperaturbereich bereits ein partieller bis vollständiger Chlor-/Phenoxy-Austausch stattfindet.

Da unter den erfindungsgemässen Bedingungen ein praktisch vollständiger Chlor-/Amin-Austausch ohne Anwendung eines Aminüberschusses möglich ist, können die Farbstoffe ohne zusätzliche Reinigungsoperationen in optimalen färberischen Qualitäten erhalten werden. Es genügt, die eingesetzten Lösungsmittel, beispielsweise durch Wasserdampf- oder Vakuumdestillation, zu entfernen, um die Farbstoffe in ausreichender Reinheit und praktisch quantitativer

Ausbeute zu erhalten. Das ist überraschend, da es unter den erfindungsgemässen Reaktionsbedingungen nicht möglich ist, die Chloratome des Cyanurchlorids auch nur annähernd vollständig allein gegen 1-Amino-5-benzoylaminoanthrachinon auszutauschen.

Die erfindungsgemässen Küpenfarbstoffe färben Cellulosefasern, insbesondere Baumwolle, aus der Küpe nach allen üblichen Färbeverfahren in sehr kräftigen, klaren, gelben bis orangegelben Tönen.

Gegenüber den nächstvergleichbaren, aus der DE-PS Nr. 590163 bekannten Farbstoffen zeichnen sich die Verbindungen der Formel I durch eine höhere Farbstärke und zum Teil auch durch eine verbesserte Lichtechtheit aus.

Darüber hinaus entwickeln die neuen Farbstoffe im Gegensatz zu den bekannten Farbstoffen der Beispiele 1 bis 6 der genannten Patentschrift optimale Farbstärke beim Färben aus warmer Flotte. Sie sind daher auch unbeschränkt in moderne Kontinue-Färbeverfahren einsetzbar.

Die CH-A Nr. 289289 beschreibt die Umsetzung von Cyanurchlorid mit 1-Amino-5-(o-chlorbenzoyl)aminoanthrachinon und 1-Aminoanthrachinon im Verhältnis 1:2:1. Nach den angegebenen Reaktionsbedingungen gelingt es lediglich, zwei Chloratome des Cyanurchlorids gegen Anthrachinoylaminoreste auszutauschen.

Technisch und wirtschaftlich bedeutsamer als dis reinen Farbstoffe sind Gemische dieser Farbstoffe, insbesondere solche, wie man sie bei der Kondensation von Cyanurchlorid mit insgesamt 3 mol (vorzugsweise aber einem Unterschuss bis zu 10% der Stöchiometrie) eines Gemisches der Amine $A-NH_2$ und $B-NH_2$ in Gegenwart von aromatischen Oxyverbindungen bei 90-150°C erhält.

Solche Farbstoffgemische entsprechen etwa der folgenden Formel

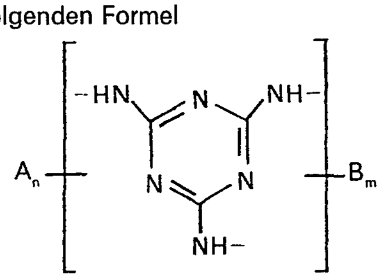

(II)

worin

A und B die in Formel I angegebene Bedeutung haben,

n für eine Zahl von 1,0 bis 1,8,

m für eine Zahl von 1,2 bis 2,0, stehen,

wobei die Summe von n + m = 3 beträgt.

Besonders wirtschaftlich ist es, anstelle der reinen Amine der Formeln $A-NH_2$ und $B-NH_2$ deren technische Gemische einzusetzen. Dabei handelt es sich vor allem um solche Produkte, die bei der fabrikmässigen Herstellung von 1-Nitroanthrachinon und Dinitroanthrachinon durch Nitrierung von Anthrachinon als Rohprodukte und anschliessende Reduktion anfallen.

Besonders überraschend ist, dass selbst die nitroanthrachinonhaltigen Mutterlaugen und sonstigen Abfallprodukte der grosstechnischen Reinigung von 1-Nitroanthrachinon mit gutem Erfolg als Ausgangsbasis zur Herstellung der Amine verwendet werden können.

Solche Abfallprodukte haben etwa folgende Zusammensetzung:

1-Nitroanthrachinon: < 60%, vorzugsweise < 45%
2-Nitroanthrachinon: < 40%, vorzugsweise < 30%
1,5-Dinitroanthrachinon:
1,8-Dinitroanthrachinon:
1,6-Dinitroanthrachinon:
1,7-Dinitroanthrachinon:
unsubst. Anthrachinon:
sonstige:
} in Summe mindestens 30%

Durch Reduktion mit üblichen Mitteln erhält man daraus Amingemische entsprechender Zusammensetzung, die anstelle der reinen Amine $A-NH_2$ mit gutem Erfolg zur Herstellung von Trisaminotriazinen des beanspruchten Types verwendet werden können.

Auch die aus technischen Dinitroanthrachinonen erhaltenen Diaminoanthrachinongemische können zur Herstellung von Küpenfarbstoffen des beanspruchten Typs eingesetzt werden, indem man diese mit einem Benzoylhalogenid monoacyliert und das Reaktionsprodukt in der oben beschriebenen Weise zur Einführung des Restes B verwendet. Alternativ kann man das Diamingemisch zunächst mit Cyanurchlorid in der Weise umsetzen, dass nur eine Aminogruppe acyliert wird, und anschliessend den Benzoylrest einführen.

Nach den genannten Verfahren werden Küpenfarbstoffe erhalten, deren Nuancen in erstaunlichem Masse reproduzierbar sind und deren Qualität oftmals die unter Verwendung von reinen Ausgangsmaterialien hergestellter Farbstoffe annähernd erreicht bzw. bisweilen sogar übertrifft. Dieses gilt insbesondere für die Farbstärke.

*Beispiel 1:*

a) 67,4 g 1-Amino-5-benzoylaminoanthrachinon und 21,9 g 1-Aminoanthrachinon (98%ig) werden in 550 ml Phenol bei 60°C mit 18,5 g Cyanurchlorid unter Rühren versetzt. Nun wird gleichmässig schnell innerhalb 90 min auf 110°C geheizt und während 1 h bei 110 bis 115°C gehalten. In einer weiteren Stunde heizt man auf 140°C gleichmässig schnell hoch und hält bei dieser Temperatur so lange, bis in einer entnommenen Probe chromatographisch nur noch Spuren der eingesetzten Amine nachweisbar sind (ca. 2-3 h). Dabei setzt ab ca. 75°C Salzsäureentwicklung ein, die beim Hochheizen bei 100 bis 110°C stärker wird, um gegen Ende der Reaktion stark abzuflauen.

Man treibt nun das Phenol aus dem Reaktionsgemisch mit Wasserdampf ab, saugt aus der verbliebenen wässerigen Suspension den Farbstoff ab, wäscht mit heissem Wasser und trocknet.

Ausbeute : 96 g; Chlorgehalt: 0,4%.

Dieses Produkt färbt – nach üblichen Verfahren in feinverteilte Form gebracht – Baumwolle aus 55°C warmer Küpe in klarem kräftigem goldorangem Ton.

b) Man arbeitet wie in a beschrieben, destilliert aber nach beendeter Reaktion das Phenol im Vakuum bei 140°C ab. Man erhält den gleichen Farbstoff wie in a.

*Beispiel 2:*

In einem 50-l-Rührwerkskessel werden 2,65 kg 1-Amino-5-benzoylaminoanthrachinon und 1,51 kg 1-Aminoanthrachinon in 30 l trockenem Phenol bei 60°C eingerührt; man gibt 0,925 kg Cyanurchlorid zu, erwärmt in 90 min gleichmässig schnell auf 110°C, rührt 1 h bei dieser Temperatur nach, erwärmt in 90 min gleichmässig auf 140 bis 142°C und rührt weitere 2 h bei dieser Temperatur nach. Während der Reaktion wird ab 90°C ein mässig starker $N_2$-Strom durchgeleitet, um die gebildete Salzsäure zügig zu entfernen. Die Salzsäure wird in einem nachgeschalteten, mit Wasser gefüllten Wäscher absorbiert. Man setzt nun der Schmelze so viel feste Soda zu, dass der ursprünglich stark saure Titer sich dauerhaft auf pH 6,5 bis 7,5 einstellt, drückt sie in einen 50-l-Venuleth und destilliert im Vakuum durch indirekte Heizung mit 6 bar Dampf alles Phenol ab. Der pulverige Inhalt des Venuleth wird zur Beseitigung der Salze mit der doppelten Menge kaltem Wasser angerührt, abgesaugt und mit der zweifachen Menge Wasser salzfrei gewaschen. Der Farbstoffpresskuchen 5,6 kg – er enthält 4,55 kg Feststoff – wird nach üblichem Verfahren dispergiert und getrocknet. Cl-Gehalt einer getrockneten Probe des Presskuchens: 0,25%. Baumwolle wird aus der Küpe nach allen Färbemethoden in goldorangen Tönen gefärbt.

*Beispiel 3:*

53 g 1-Amino-5-benzoylaminoanthrachinon und 30 g 1-Aminoanthrachinon (98%ig) werden in 550 ml Phenol bei 60°C mit 18,5 g Cyanurchlorid unter Rühren versetzt. Nun wird gleichmässig schnell innerhalb 90 min auf 110°C geheizt, eine weitere Stunde bei dieser Temperatur gehalten, in einer weiteren Stunde gleichmässig schnell auf 140°C erwärmt und 3 h bei 140°C gehalten.

Man treibt das Phenol mit Wasserdampf ab, saugt aus der wässerigen Suspension den Farbstoff ab, wäscht mit heissem Wasser und trocknet. Erhalten werden 91 g; Cl-Gehalt: 0,4%. Dieses Produkt färbt Baumwolle in einem kräftigen gelborangen Ton.

*Beispiel 4:*

40,1 g 1-Aminoanthrachinon werden mit 18,5 g Cyanurchlorid in 400 ml Phenol während 1 h bei 75°C, weitere 2 h bei 90-95°C unter Rühren erwärmt. Chromatographisch ist jetzt kein 1-Aminoanthrachinon mehr nachweisbar. Eine im Vakuum vom Phenol befreite Probe enthält 8,0% Chlor.

Nun gibt man 41 g 1-Amino-5-benzoylaminoanthrachinon zu, erwärmt auf 140-145°C und hält bei dieser Temperatur 3 h lang unter Rühren.

Man entfernt nun durch Wasserdampfdestillation das Phenol, saugt ab, wäscht heiss mit Wasser und trocknet.

Ausbeute: 86,1 g; Chlor-Gehalt: 0,4%.

Dieses Produkt färbt Baumwolle – in feinverteilte Form gebracht – grüner und eine Spur klarer als das nach Beispiel 1a erhaltene Produkt.

*Beispiel 5:*

Man arbeitet wie in Beispiel 3 beschrieben, ersetzt das 1-Aminoanthrachinon aber durch eine gleich grosse Menge 2-Aminoanthrachinon.

Erhalten werden 88,1 g eines Farbstoffs, der 0,6% Chlor enthält und Baumwolle in einem ähnlichen Ton färbt wie der nach Beispiel 3 erhaltene Farbstoff.

*Beispiel 6:*

50 g 1-Amino-5-benzoylaminoanthrachinon und 32,6 g 1-Aminoanthrachinon werden mit 18,5 g Cyanurchlorid bei 80°C in 550 ml Phenol eingerührt, 30 min bei 80°C nachgerührt, innerhalb 2 h auf 120°C geheizt und bei dieser Temperatur so lange gehalten, bis nur noch Spuren der Aminoverbindungen nachweisbar sind.

Man treibt das Phenol mit Wasserdampf ab, saugt den Farbstoff ab, wäscht mit heissem Wasser und trocknet. Erhalten werden 8,8 g; Cl-Gehalt: 0,5%.

Dieses Produkt färbt – in fein verteilte Form gebracht – Baumwolle aus der Küpe sehr echt in einem kräftigen goldorangen Ton.

*Beispiel 7:*

a) In 1000 ml Phenol werden 37 g 2,4-Dichlor-6-anthrachinonylamino(1)triazin (Chlorgehalt: 19,0%) – erhalten durch Einwirkung von molaren Mengen von 1-Aminoanthrachinon und Cyanurchlorid in Nitrobenzol bei 130°C während 30 min – mit 68 g 1-Amino-5-benzoylaminoanthrachinon versetzt. Man rührt 1 h bei 100-110°C und weitere 3 h bei 140°C. Chromatographisch lässt sich nur noch wenig 1-Amino-5-benzoylaminoanthrachinon nachweisen.

Das Phenol wird mit Wasserdampf abgetrieben, das Produkt filtriert, gewaschen und getrocknet.

Ausbeute: 96,9 g; Chlorgehalt: 0,5%.

In fein verteilte Form gebracht, färbt der Farbstoff Baumwolle aus warmer Küpe in einem Ton, der etwas röter ist als derjenige der mit CI Orange 15 erhalten wird.

b) 79,5 g 2,4-Bis-(5-benzoylamino)anthrachinonylamino(1)-6-chloranthrachinon = 0,1 mol – erhalten durch Umsetzung von 0,2 mol 1-Amino-5-benzoylaminoanthrachinon mit 0,1 mol Cyanurchlorid in 500 ml Nitrobenzol während 30-45 min bei 190-95°C – werden mit 22,3 g 1-Aminoanthrachinon = 0,1 mol und 550 ml Phenol wie in a beschrieben, erwärmt und anschliessend mit Wasserdampf aufgearbeitet.

Erhalten werden 97 g; Cl-Gehalt: 3,6%.

*Beispiel 8:*

a) Man arbeitet wie in Beispiel 3 beschrieben, setzt aber anstelle von 98%igem 1-Aminoanthrachinon eine gleich grosse Gewichtsmenge rohes 1-Aminoanthrachinon folgender Zusammensetzung ein:

72,5% 1-Aminoanthrachinon
5,9% 2-Aminoanthrachinon
3,1% 1,5-Diaminoanthrachinon
3,0% 1,6-Diaminoanthrachinon
3,1% 1,7-Diaminoanthrachinon
2,8% 1,8-Diaminoanthrachinon
2,3% Anthrachinon

erhalten nach Beispiel 1 der DE-OS Nr. 2740889.

Ausbeute an Küpfenfarbstoff: 91,8 g; Cl-Gehalt: 0,3%.

Dieses Produkt färbt – in fein verteilte Form gebracht – eine Spur röter und etwas stumpfer als das nach Beispiel 1a erhaltene Produkt.

b) Wird wie in a gearbeitet, aber nach Abtreibung des Phenols in die Wasserdampfdestillation bei pH 8 bis 9 so viel Chlorlauge gegeben, dass nach 1 h Hypochlorit noch nachweisbar ist, so erhält man nach üblicher Aufarbeitung einen Farbstoff, der bei gleicher Farbstärke, wenig gelber, eine Spur klarer färbt als der nach Beispiel 1a erhaltene.

*Beispiel 9:*

a) Man arbeitet wie in Beispiel 1a beschrieben, setzt aber anstelle von 98%igem 1-Aminoanthrachinon eine gleich grosse Gewichtsmenge rohes 1-Aminoanthrachinon folgender Zusammensetzung ein:

72,5% 1-Aminoanthrachinon
5,9% 2-Aminoanthrachinon
3,1% 1,5-Diaminoanthrachinon
3,0% 1,6-Diaminoanthrachinon
3,1% 1,7-Diaminoanthrachinon
2,8% 1,8-Diaminoanthrachinon
2,3% Anthrachinon

erhalten nach Beispiel 1 der DE-OS Nr. 2740889.

Ausbeute: 91,8 g; Cl-Gehalt: 0,3%.

Dieses Produkt färbt – eine in fein verteilte Form gebracht – Spur röter und etwas stumpfer als das nach Beispiel 1a erhaltene Produkt.

b) Wird wie in a gearbeitet, aber nach Abtreibung des Phenols in die Wasserdampfdestillation bei pH 8 bis 9 so viel Chlorlauge gegeben, dass nach 1 h Hypochlorit noch nachweisbar ist, so erhält man nach üblicher Aufarbeitung einen Farbstoff, der bei gleicher Farbstärke, wenig gelber, eine Spur klarer färbt als der nach Beispiel 1a erhaltene.

*Beispiel 10:*

a) 49,3 g 1-Amino-5-benzoylaminoanthrachinon und 28,2 g eines Aminoanthrachinongemisches folgender Zusammensetzung:

1-Aminoanthrachinon: 40,1%
2-Aminoanthrachinon: 22,5%
1,5-Diaminoanthrachinon: 2,8%
1,8-Diaminoanthrachinon: 5,6%
1,6-Diaminoanthrachinon: 3,6%
1,7-Diaminoanthrachinon: 3,9%
Anthrachinon: 12,4%
(Rest auf 100% unbekannt)

werden mit 18,5 g Cyanurchlorid in 600 ml Phenol in 30 min auf 110°C erwärmt, bei dieser Temperatur 1 h gehalten, anschliessend in 1 h auf 140°C erwärmt und bei dieser Temperatur 3 h gehalten. Das Phenol wird mit Wasserdampf abgetrieben, die verbleibende Suspension filtriert, heiss gewaschen und getrocknet. Erhalten werden 83,5 g Farbstoff, der in fein verteilte Form gebracht Baumwolle in kräftigem goldorangem Ton färbt.

b) Man arbeitet wie in a, behandelt nach der Wasserwäsche den Presskuchen bei pH 8 bis 9 und 90 bis 95°C 2 h als wässerige Dispersion mit Chlorlauge, filtriert und wäscht neutral. Der erhaltene Farbstoff färbt Baumwolle etwas stärker als der nach a erhaltene mit deutlich klarerer Nuance.

c) Das in a eingesetzte Aminoanthrachinongemisch wurde erhalten durch NaSH-Reduktion aus einem Nitroanthrachinongemisch entsprechender Zusammensetzung, wie es bei der Isolierung aus einer Mutterlauge, die bei der Reinigung von rohem Anthrachinonnitrierungsprodukt gemäss Verfahren der DE-OS Nr. 2343978 anfällt, erhalten wird.

## Patentansprüche

1. Triazinverbindungen der Formel

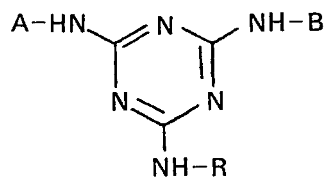

(I)

worin

R für A oder B,

A für einen Rest der Formel

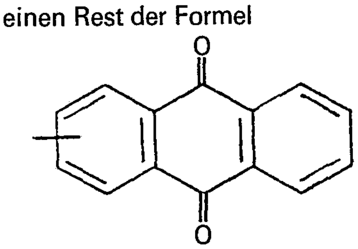

und

B für einen Rest der Formel

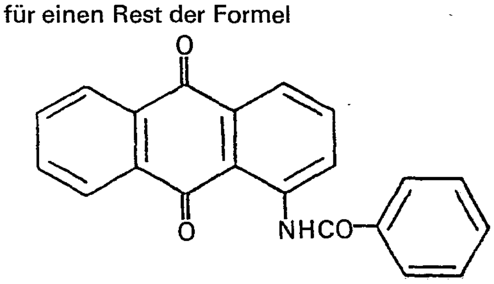

stehen, wobei diese Reste durch in der Chemie der Küpenfarbstoffe übliche Substituenten substituiert sein können.

2. Verfahren zur Herstellung von Triazinverbindungen gemäss Anspruch 1, dadurch gekennzeichnet, dass man 1 mol Cyanurchlorid mit 1 oder 2 mol eines Amins der Formel

$$A{-}NH_2$$

worin A die in Anspruch 1 genannte Bedeutung hat, oder 1 oder 2 mol eines Amins der Formel

$$B{-}NH_2$$

worin B die in Anspruch 1 genannte Bedeutung hat,
in einem indifferenten organischen Lösungsmittel unter Austausch von 1 bis 2 Chloratomen umsetzt und das Reaktionsprodukt mit 2 bzw. 1 mol eines der Amine $A-NH_2$ bzw. $B-NH_2$, das von dem in der ersten Stufe eingesetzten Amin verschieden ist, in Gegenwart einer aromatischen Oxyverbindung unter praktisch vollständigem Chloraustausch kondensiert.

3. Triazinverbindungen gemäss Anspruch 1, dadurch gekennzeichnet, dass diese als Mischung von Stoffen der Formel (I) vorliegen, die hinsichtlich des Substituenten R voneinander verschieden sind.

4. Triazinverbindungen gemäss einem der beiden Ansprüche 1 oder 3, dadurch gekennzeichnet, dass diese als Mischungen von Stoffen der Formel

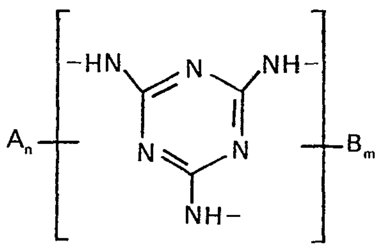

(II)

worin
n für eine Zahl von 1,0 bis 1,8,
m für eine Zahl von 1,2 bis 2,0 stehen, und
wobei die Summe n + m = 3 beträgt,
und worin die Reste A und B die in Anspruch 1 genannte Bedeutung haben, vorzugsweise aber nicht weiter substituiert sind.

5. Verfahren zur Herstellung von Farbstoffmischungen gemäss Anspruch 3, dadurch gekennzeichnet, dass man 1 mol Cyanurchlorid mit insgesamt 2,7 bis 3 mol eines Gemisches der Amine $A-NH_2$ und $B-NH_2$, wobei A und B die in Anspruch 1 genannte Bedeutung haben, in Gegenwart von aromatischen Hydroxyverbindungen bis zum praktisch vollständigen Chloraustausch umsetzt.

6. Verfahren nach Anspruch 5, dadurch gekennzeichnet, dass man ein Gemisch aus 1,0 bis 1,8 mol des Amins $A-NH_2$ und 1,2 bis 2,0 mol des Amins $B-NH_2$ einsetzt, wobei A und B die in Anspruch 1 genannte Bedeutung haben und die Molensumme der Amine 2,7 bis 3,0 beträgt.

7. Verfahren gemäss der Ansprüche 5 und 6, dadurch gekennzeichnet, dass man in einem Eintopfverfahren die Umsetzung zunächst bei 70 bis 110°C bis zum erfolgen Mono- bzw. Dichloraustausch durchführt und dann bei 120 bis 150°C zu Ende führt.

8. Verfahren nach Anspruch 5, dadurch gekennzeichnet, dass man als Amine der Formel $A-NH_2$ solche einsetzt, die durch Reduktion der Abfallprodukte und vorzugsweise der Rohprodukte der technischen Anthrachinonmononitrierung erhalten werden.

9. Verfahren nach einem der beiden Ansprüche 2 oder 5, dadurch gekennzeichnet, dass man als Aminkomponente $B-NH_2$ solche einsetzt, die durch Reduktion von Dinitroanthrachinongemischen und anschliessende Monoacylierung erhalten werden.

10. Verwendung der Triazinverbindungen gemäss der Ansprüche 1, 3 und 4 sowie der Verfahrensprodukte gemäss der Ansprüche 2 und 5 bis 9 als Küpenfarbstoffe, vorzugsweise nach der Warmfärbemethode.

## Revendications

1. Triazines de formule

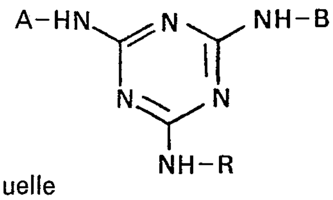

(I)

dans laquelle
R représente A ou B,
A représente un radical de formule

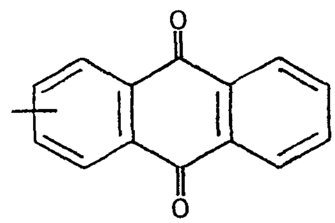

et

B représente un radical de formule

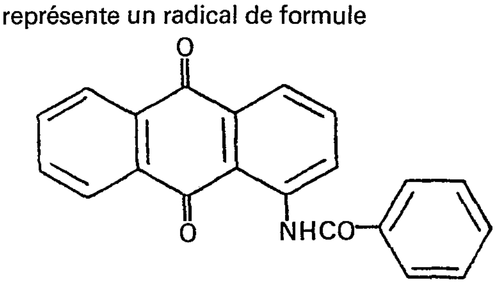

ces radicaux pouvant être substitués par des substituants usuels dans la chimie des colorants pour cuve.

2. Procédé de préparation de triazines selon la revendication 1, caractérisé en ce qu'on fait réagir 1 mol de chlorure de cyanuryle avec 1 ou 2 mol d'une amine de formule

$$A-NH_2$$

dans laquelle A a le sens indiqué dans la revendication 1, ou 1 ou 2 mol d'une amine de formule

$$B-NH_2$$

dans laquelle B a le sens indiqué dans la revendication 1,
dans un solvant organique inerte avec remplacement de 1 à 2 atomes de chlore, et en ce que l'on condense le produit de réaction avec 2 ou 1 mol de l'une des amines $A-NH_2$ ou $B-NH_2$, qui est différente de l'amine utilisée dans la première étape, en présence d'un composé oxygéné aromatique avec remplacement pratiquement total du chlore par échange.

3. Triazines selon la revendication 1, caractérisées en ce qu'elles sont présentes sous la forme

d'un mélange des substances de formule (I), qui diffèrent les unes des autres par les substituants R.

4. Triazines selon l'une des revendications 1 ou 3, caractérisées en ce qu'elles sont présentes sous forme de mélanges de formule

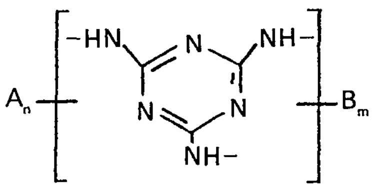

(II)

dans laquelle

n représente un nombre valant de 1,0 à 1,8,
m représente un nombre valant de 1,2 à 2,0, et
la somme (n + m) valant 3,

et les radicaux A et B ont le sens indiqué à la revendication 1, mais ne comportent, de préférence, pas d'autres substituants.

5. Procédé de préparation de mélanges de colorants selon la revendication 3, caractérisé en ce qu'on fait réagir 1 mol de chlorure de cyanuryle avec au total 2,7 à 3 mol d'un mélange des amines $A-NH_2$ et $B-NH_2$, où A et B ont le sens indiqué à la revendication 1, en présence de composés hydroxylés aromatiques, jusqu'à remplacement pratiquement total du chlore après échange.

6. Procédé selon la revendication 5, caractérisé en ce qu'on utilise un mélange de 1,0 à 1,8 mol de l'amine $A-NH_2$ et de 1,2 à 2,0 mol de l'amine $B-NH_2$, A et B ayant les sens indiqués à la revendication 1, et la somme des moles des amines valant de 2,7 à 3,0.

7. Procédé selon les revendications 5 et 6, caractérisé en ce qu'on conduit la réaction en un procédé à un seul récipient tout d'abord à 70-110°C, jusqu'à remplacement réussi de 1 ou 2 atomes de chlore, puis à 120-150°C jusqu'à la fin.

8. Procédé selon la revendication 5, caractérisé en ce qu'on utilise comme amines de formule $A-NH_2$ celles qui ont été obtenues par réduction des sous-produits et avantageusement des produits bruts de la mononitration technique de l'anthraquinone.

9. Procédé selon l'une des revendications 2 ou 5, caractérisé en ce qu'on utilise comme amines $B-NH_2$ celles qui ont été obtenues par réduction de mélanges de dinitroanthraquinones puis monoacylation.

10. Utilisation des triazines selon les revendications 1, 3 et 4 ainsi que des produits du procédé selon les revendications 2 et 5 à 9 comme colorants pour cuve, avantageusement selon le procédé de teinture à chaud.

## Claims

1. Triazine compounds of the formula

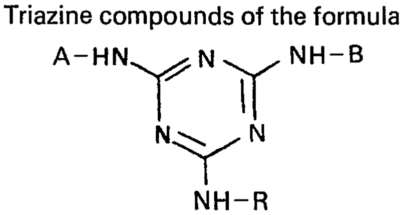

(I)

wherein

R represents A or B,

A represents a radical of the formula

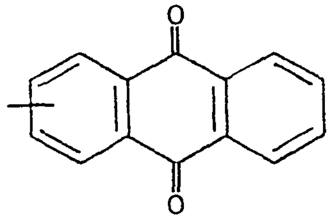

and

B represents a radical of the formula

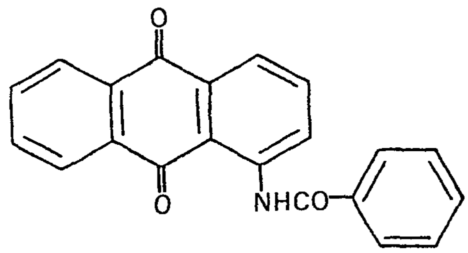

it being possible for these radicals to be substituted by substituents customary in the chemistry of vat dyestuffs.

2. Process for the preparation of triazine compounds according to Claim 1, characterised in that 1 mol of cyanuric chloride is reacted with 1 or 2 mol of an amine of the formula

$$A-NH_2$$

wherein A has the meaning mentioned in Claim 1, or 1 or 2 mol of an amine of the formula

$$B-NH_2$$

wherein B has the meaning mentioned in Claim 1, in an inert organic solvent, with replacement of 1 to 2 chlorine atoms and the reaction product is condensed with 1 or 2 mol respectively of one of the amines $A-NH_2$ or $B-NH_2$, which differs from the amine used in the first step, in the presence of an aromatic hydroxy compound, with virtually complete chlorine replacement.

3. Triazine compounds according to Claim 1, characterised in that these are provided as a mixture of substances of the formula (I), which differ from one another in respect of the substituent R.

4. Triazine compounds according to Claim 1 or 3, characterised in that these as mixtures of substances of the formula

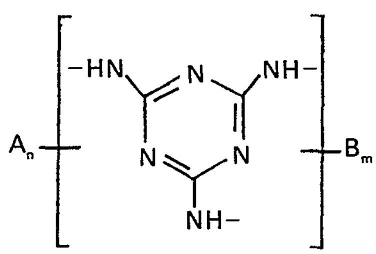

(II)

wherein

n represents a number from 1.0 to 1.8, and
m represents a number from 1.2 to 2.9, and
the sum of n+m=3,

and wherein the radicals A and B have the

meaning mentioned in Claim 1, but are preferably not further substituted.

5. Process for the preparation of dyestuff mixtures according to Claim 3, characterised in that 1 mol of cyanuric chloride is reacted with a total of 2.7 to 3 mol of a mixture of the amines $A-NH_2$ and $B-NH_2$, in which A and B have the meaning mentioned in Claim 1, in the presence of aromatic hydroxy compounds, until chlorine replacement is virtually complete.

6. Process according to Claim 5, characterised in that a mixture of 1.0 to 1.8 mol of the amine $A-NH_2$ and 1.2 to 2.0 mol of the amine $B-NH_2$ is used, in which A and B have the meaning mentioned in Claim 1 and the total number of mols of the amiens is 2.7 to 3.0.

7. Process according to Claims 5 and 6, characterised in that in a one-vessel process the reaction is initially carried out at 70 to 110°C until monochloro or dichloro replacement has taken place and is then completed at 120 to 150°C.

8. Process according to Claim 5, characterised in that the amines of the formula $A-NH_2$ used are those which are obtained by reducing the waste products and preferably the crude products of the industrial mononitration of anthraquinone.

9. Process according to Claim 2 or 5, characterised in that the amine components $B-NH_2$ used are those which are obtained by reduction of dinitroanthraquinone mixtures and subsequent monoacylation.

10. Use of triazine compounds according to Claims 1, 3 and 4 and also of the process products according to Claims 2 and 5 to 9, as vat dyestuffs, preferably by the warm dyeing method.